# FASCICULE DE BREVET EUROPEEN

(11) **EP 3 501 975 B1**
(45) Date de publication et mention de la délivrance du brevet: **20.05.2020**
(21) Numéro de dépôt: 18209102.5
(22) Date de dépôt: 29.11.2018
(51) Int. Cl.: B64C 5/18, B64C 3/34, B64D 37/04, B64C 5/02, B64C 17/10

(54) **AVION A CONFIGURATION EVOLUTIVE EN VOL**
FLUGZEUG MIT EVOLUTIVER KONFIGURATION BEIM FLIEGEN
AIRCRAFT WITH ADAPTIVE CONFIGURATION IN FLIGHT

(30) Priorité: 19.12.2017 FR 1762408
(43) Date de publication de la demande: 26.06.2019
(73) Titulaire: Airbus Operations S.A.S., 31060 Toulouse (FR)
(72) Inventeur: FAROUZ-FOUQUET, Mathias, 31300 Toulouse (FR)
(74) Mandataire: Gicquel, Olivier Yves Gérard

(56) Documents cités:
- US-A1- 2005 236 520
- US-A1- 2010 044 515
- US-A1- 2012 298 795
- US-A1- 2016 375 985

## Description

### DOMAINE TECHNIQUE

La présente invention concerne un avion à configuration aérodynamique évolutive en vol.

### ETAT DE LA TECHNIQUE

La présente invention s'applique à un avion, en particulier un avion de transport, qui comporte notamment un fuselage, deux ailes, au moins deux moteurs agencés de part et d'autre d'un plan vertical de symétrie de l'avion, et des empennages arrière, horizontal et vertical, mettant en œuvre des fonctions usuelles de stabilité et de contrôle de l'attitude et de la trajectoire de l'avion. On sait qu'en général, l'empennage horizontal d'un avion comprend une partie fixe et une partie mobile représentant une gouverne de profondeur, et l'empennage vertical comprend une partie fixe et une partie mobile représentant une gouverne de direction. L'empennage horizontal peut aussi être pivotable autour d'un axe perpendiculaire à l'axe longitudinal de l'avion tel que décrit dans le document US2012/0298795.

Une telle architecture usuelle d'avion à empennages (horizontal et vertical) arrière, présente des inconvénients. En particulier :
- en vol en croisière de l'avion, l'empennage vertical arrière contribue peu à l'aérodynamisme de l'avion et apporte du poids et de la traînée pour aucun avantage aérodynamique, économique ou de sécurité. Cet empennage vertical arrière est utilisé, principalement, durant les phases de décollage et d'atterrissage, lorsque des changements rapides dans la direction peuvent apparaître. Il est également très important lors d'un arrêt subit d'un moteur au cours du décollage. La gouverne de direction est alors activée par le pilote pour agir contre le déséquilibre de poussée. Par conséquent, l'empennage vertical arrière est uniquement utilisé pendant de courtes périodes de temps durant le vol, bien qu'il présente une surface importante, généralement de l'ordre de 10% de la surface d'aile ; et
- l'empennage horizontal arrière a pour but de contrecarrer à la fois le moment de tangage naturel des ailes, et la position du centre de gravité localisé à l'avant du centre de sustentation des ailes. Le plan horizontal arrière exerce une force vers le bas pour maintenir l'avion stable et en équilibre lors d'un vol. Il en découle une perte d'efficacité à la fois aérodynamique et économique. L'empennage horizontal arrière ne participe pas à la portance de l'avion. Au contraire, il la dégrade d'environ 5 %, tout en représentant de 15 % à 20 % de la surface d'aile.

La configuration d'un tel avion, qui est figée, n'est donc pas optimale dans toutes les phases de vol.

Dans le cadre de la présente invention, la configuration de l'avion dépend notamment des caractéristiques de l'empennage arrière et de la position du centre de gravité de l'avion.

Les documents US2010/0044515 et US2016/0375985 présentent des avions comportant des systèmes configurés pour déplacer le centre de gravité de l'avion par transfert de carburant des reservoirs situés dans les ailes vers des réservoirs situés dans l'empennage horizontal et inversement.

### EXPOSÉ DE L'INVENTION

La présente invention a pour objet de remédier à cet inconvénient. Pour ce faire, elle concerne un avion, en particulier un avion de transport, qui présente un axe longitudinal et qui comporte au moins un fuselage, deux ailes, des moteurs, un empennage arrière comprenant un empennage horizontal pourvu de deux extrémités d'empennage, et au moins un premier ensemble de réservoirs de carburant.

Selon l'invention, ledit avion comporte au moins un second ensemble de réservoirs de carburant, décalé par rapport audit premier ensemble de réservoirs de carburant au moins selon l'axe longitudinal, et au moins un système de transfert de carburant configuré pour pouvoir transférer, au moins en vol, du carburant de l'un à l'autre desdits premier et second ensembles de réservoirs de carburant, et lesdites extrémités d'empennage sont montées de manière à pouvoir être pivotées, au moins en vol, par rapport audit empennage horizontal.

Ainsi, grâce à la capacité à la fois de déplacer du carburant longitudinalement (entre les deux ensembles de réservoirs de carburant) et de faire pivoter les extrémités d'empennage, lors d'un vol, on dispose d'une possibilité de faire évoluer la configuration de l'avion en vol. Comme précisé ci-dessous, ceci permet notamment d'adapter la configuration de l'avion à la phase de vol courante, afin de tirer profit des différents éléments de l'empennage arrière (et ceci de manières différenciées) lors des diverses phases de vol.

Avantageusement, ledit système de transfert de carburant est apte à être commandé et il est configuré pour pouvoir amener, au moins en vol, du carburant de l'un à l'autre desdits premier et second ensembles de réservoir de carburant afin d'obtenir, alternativement, l'un ou l'autre des deux états de remplissage suivants :
- un premier état de remplissage, dans lequel le centre de gravité de l'avion est situé vers l'avant de l'avion par rapport au centre de sustentation (des ailes) ; et
- un second état de remplissage, dans lequel le centre de gravité de l'avion est situé vers l'arrière de l'avion par rapport au centre de sustentation.

En outre, de façon avantageuse, l'avion comporte également au moins un mécanisme de pivotement apte à être commandé et configuré pour pouvoir amener chacune des deux extrémités d'empennage, au moins en vol, alternativement dans l'une ou l'autre des deux positions stables suivantes :
- une première position dite repliée, dans laquelle les deux extrémités d'empennage sont agencées sensiblement orthogonalement à un plan général dudit empennage horizontal de manière à former un empennage vertical ; et
- une seconde position dite déployée, dans laquelle les deux extrémités d'empennage sont agencées sensiblement dans le plan général dudit empennage horizontal de manière à former avec l'empannage horizontal une surface d'empennage horizontal augmentée.

Dans le cadre de la présente invention, le système de transfert de carburant et le mécanisme de pivotement peuvent être réalisés de différentes manières.

Avantageusement, le système de transfert de carburant comporte au moins un dispositif de pompage.

De façon avantageuse, ledit premier ensemble de réservoirs de carburant comprend :
- au moins un réservoir de carburant agencé dans l'une desdites ailes de l'avion ; et
- au moins un réservoir de carburant agencé dans l'autre desdits ailes de l'avion.

En outre, en complément ou en variante, avantageusement, ledit premier ensemble de réservoirs de carburant comprend au moins un réservoir de carburant agencé dans le fuselage de l'avion, longitudinalement au niveau de l'emplanture des ailes sur le fuselage.

Par ailleurs, de façon avantageuse, l'empennage horizontal comporte deux parties d'empennage agencées de part et d'autre d'un axe vertical de symétrie de l'avion, et ledit second ensemble de réservoirs de carburant comprend :
- au moins un réservoir de carburant agencé dans l'une desdites parties d'empennage de l'empennage horizontal ; et
- au moins un réservoir de carburant agencé dans l'autre desdites parties d'empennage de l'empennage horizontal.

En outre, en complément ou en variante, avantageusement, ledit second ensemble de réservoirs de carburant comprend au moins un réservoir agencé dans le fuselage de l'avion, longitudinalement au niveau de l'extrémité avant de l'empennage arrière de l'avion.

La présente invention concerne également un procédé de modification en vol d'une configuration d'un avion, ledit avion comportant au moins un fuselage, deux ailes, des moteurs, un empennage arrière comprenant un empennage horizontal pourvu de deux extrémités d'empennage, et au moins des premier et second ensembles de réservoirs de carburant, ainsi qu'au moins un système de transfert de carburant configuré pour pouvoir transférer du carburant de l'un à l'autre desdits premier et second ensembles de réservoirs de carburant, lesdites extrémités d'empennage étant montées de manière à pouvoir être pivotées par rapport audit empennage horizontal.

Selon l'invention, ledit procédé de modification de la configuration de l'avion comprend :
- au moins une première étape consistant, d'une part, à transférer du carburant de manière à amener lesdits premier et second ensembles de réservoirs de carburant dans un premier état de remplissage dans lequel le centre de gravité de l'avion est situé vers l'avant de l'avion par rapport au centre de sustentation, et d'autre part, à amener lesdites extrémités d'empennage dans une position dite repliée dans laquelle lesdites extrémités d'empennage sont agencées sensiblement orthogonalement à un plan général dudit empennage horizontal ; et
- au moins une seconde étape consistant, d'une part, à transférer du carburant de manière à amener lesdits premier et second ensembles de réservoirs de carburant dans un second état de remplissage, dans lequel le centre de gravité de l'avion est situé vers l'arrière de l'avion par rapport au centre de sustentation, et d'autre part, à amener lesdites extrémités d'empennage dans une position dite déployée dans laquelle lesdites extrémités d'empennage sont agencées sensiblement dans le plan général dudit empennage horizontal,
lesdites première et seconde étapes étant mises en œuvre au moins lors d'un vol de l'avion.

De façon avantageuse, ladite première étape est mise en œuvre, au moins, lors d'une phase de décollage de l'avion et/ou lors d'une phase d'atterrissage de l'avion, et ladite seconde étape est mise en œuvre, au moins, lors d'une phase de vol en croisière de l'avion.

Ainsi :
- durant les phases de décollage et d'atterrissage, la configuration de l'avion est classique, avec les extrémités d'empennage agencées verticalement aux extrémités de l'empennage horizontal. De plus, comme par l'état de remplissage généré, le centre de gravité de l'avion est situé à l'avant du centre de sustentation, l'empennage horizontal (arrière) exerce une force vers le bas pour maintenir l'ensemble de l'avion en équilibre ;
- durant la ou les phases de vol en croisière, l'état de remplissage des premier et second ensembles de réservoirs de carburant est modifié de manière à entraîner un déplacement vers l'arrière du centre de gravité, qui se trouve alors à l'arrière du centre de sustentation principal de l'avion. L'empennage horizontal ainsi que les extrémités d'empennage (amenées dans la position déployée) deviennent une surface de portance et participent à la portance de l'avion.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en perspective, d'un avion dans une première configuration ;
- la figure 2 est une vue schématique, en perspective, d'un avion dans une seconde configuration ;
- les figures 3A, 3B et 3C illustrent schématiquement des vues en plan de l'avion se trouvant dans la configuration de la figure 1, respectivement en vue du dessus, en vue partielle de devant, et en vue latérale ;
- les figures 4A, 4B et 4C illustrent schématiquement des vues en plan de l'avion se trouvant dans la configuration de la figure 2, respectivement en vue du dessus, en vue partielle de devant, et en vue latérale ; et
- la figure 5 est le schéma synoptique d'un procédé de modification de la configuration d'un avion.

### DESCRIPTION DÉTAILLÉE

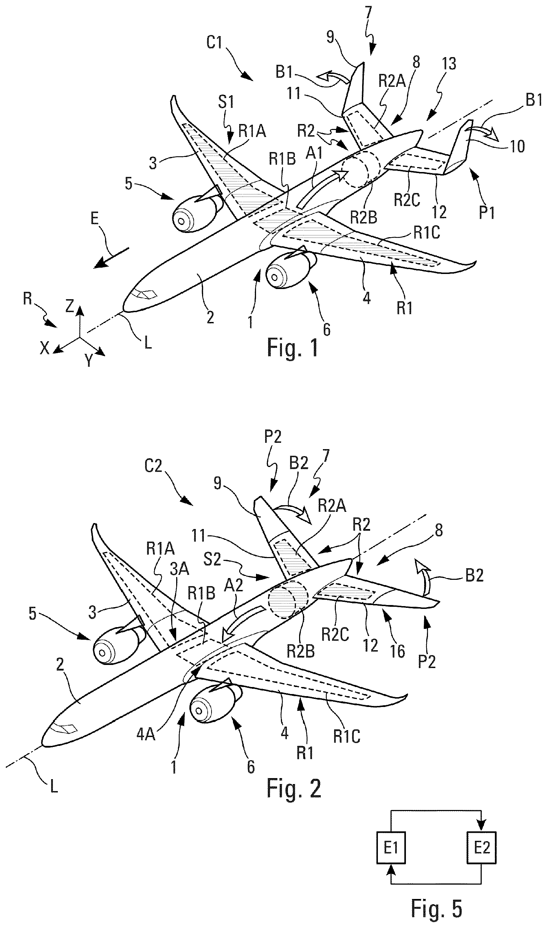

Les figures 1 et 2 montrent un avion 1, par exemple un avion de transport, présentant un axe longitudinal L, qui est représenté schématiquement dans un mode de réalisation particulier.

Pour faciliter la description, on a représenté sur la figure 1 un repère avion R usuel, comprenant trois directions principales, à savoir :
- une direction X dite longitudinale, parallèle à l'axe longitudinal L de l'avion 1 ;
- une direction Z dite verticale, perpendiculaire à la direction longitudinal X, le plan XZ formant un plan vertical de symétrie de l'avion 1 ; et
- une direction Y dite latérale, perpendiculaire audit plan XZ.

Sur la figure 1, on a également représenté un sens E de vol de l'avion 1. Dans la description suivante, les termes « avant » et « arrière » sont définis par rapport au sens E (c'est-à-dire vers l'avant ou vers l'arrière de l'avion 1). De même, les termes « haut » et « bas » sont définis par rapport au sens illustré par la flèche Z (c'est-à-dire vers le haut ou vers le bas de l'avion 1).

Cet avion 1 comporte, comme représenté notamment sur la figure 1 :
- un fuselage 2 allongé, d'axe longitudinal correspondant à l'axe longitudinal L ;
- deux ailes 3 et 4 fixées sur le fuselage 2, de part et d'autre du fuselage 2 à des emplantures 3A et 4A ;
- au moins deux moteurs 5 et 6 agencés respectivement sous les ailes 3 et 4 de part et d'autre du plan vertical de symétrie XZ de l'avion 1. Par moteur 5, 6, on entend à chaque fois l'ensemble formé des organes moteurs et d'une nacelle associée le cas échéant ; et
- un empennage arrière 7 comprenant un empennage horizontal 8 pourvu de deux extrémités d'empennage 9 et 10.

Dans l'exemple représenté sur la figure 1, l'empennage horizontal 8 est formé de deux parties d'empennage 11 et 12, de forme générale sensiblement plane, qui sont fixées de part et d'autre du fuselage 2 à proximité de la queue 13 de l'avion 1. Les extrémités d'empennage 9 et 10 sont agencées, respectivement, aux extrémités libres desdites parties d'empennage 11 et 12. Les extrémités d'empennage 9 et 10 représentent des surfaces de forme générale sensiblement plane. Les parties d'empennage 11 et 12 et les extrémités d'empennage 9 et 10 peuvent être pourvues de gouvernes usuelles (non représentées).

L'avion 1 comporte également un premier ensemble R1 de réservoirs de carburant, précisé ci-dessous.

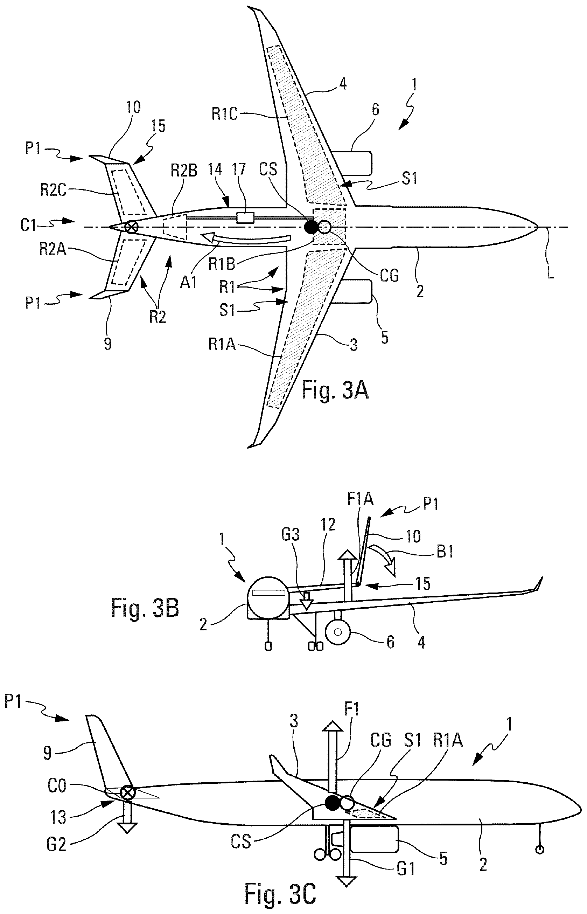

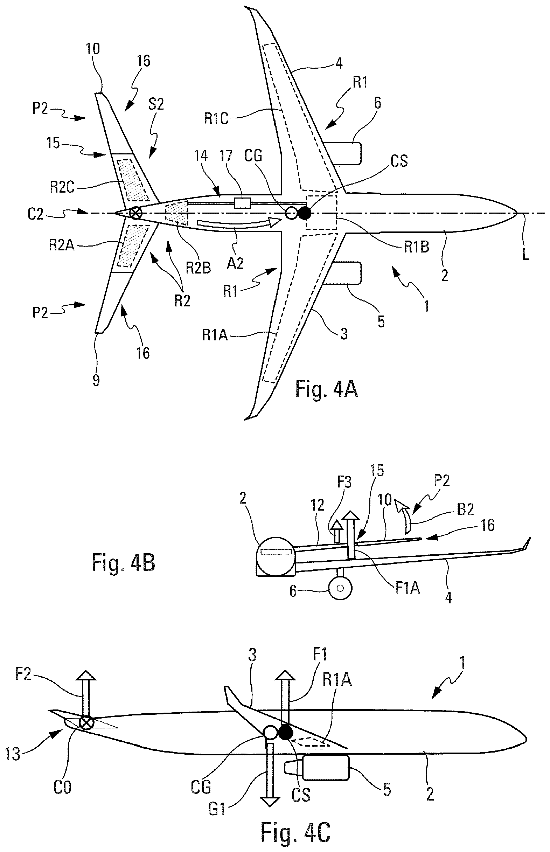

Selon l'invention, et comme précisé ci-après :
- l'avion 1 comporte également un second ensemble R2 de réservoirs de carburant, décalé par rapport audit premier ensemble R1 de réservoirs de carburant au moins selon l'axe longitudinal L, et au moins un système de transfert de carburant 14 (figures 3A et 4A). Ce système de transfert de carburant 14 est configuré pour pouvoir transférer, au moins lors d'un vol de l'avion 1, du carburant de l'un vers l'autre desdits premier et second ensembles R1 et R2 de réservoirs de carburant ; et
- les extrémités d'empennage 9 et 10 sont montées de manière à pouvoir être pivotées, également au moins lors d'un vol de l'avion 1, par rapport auxdites parties d'empennage 11 et 12 de l'empennage horizontal 8.

Dans un mode de réalisation particulier, comme représenté notamment sur les figures 1, 2, 3A et 4A, l'ensemble R1 comprend :
- un réservoir de carburant R1A agencé dans l'aile 3 (droite, dans le sens E de vol) de l'avion 1 ;
- un réservoir de carburant R1C agencé dans l'aile 4 (gauche, dans le sens E de vol) de l'avion 1 ; et
- un réservoir de carburant R1B agencé dans le fuselage 2 de l'avion 1, longitudinalement (c'est-à-dire selon l'axe longitudinal L) sensiblement au niveau des emplantures 3A et 4A (figure 2) des ailes 3 et 4 sur le fuselage 2.

De préférence, les réservoirs de carburant R1A et R1C sont agencés sensiblement symétriquement par rapport à l'axe vertical XZ de symétrie de l'avion 1.

En outre, dans un mode de réalisation particulier, comme représenté également sur les figures 1, 2, 3A et 4A, l'ensemble R2 comprend :
- un réservoir de carburant R2A agencé dans la partie d'empennage 11 (droite, dans le sens E de vol) de l'empennage horizontal 8 ;
- un réservoir de carburant R2C agencé dans la partie d'empennage 12 (gauche, dans le sens E de vol) de l'empennage horizontal 8 ; et
- un réservoir R2B agencé dans le fuselage 2 de l'avion 1, vers l'arrière de l'avion 1, longitudinalement sensiblement au niveau de l'extrémité avant de l'empennage arrière 7 de l'avion 1.

De préférence, les réservoirs de carburant R2A et R2C sont agencés sensiblement symétriquement par rapport à l'axe vertical XZ de symétrie de l'avion 1.

Les réservoirs de carburant R1A, R1B et R1C de l'ensemble R1 sont agencés (longitudinalement) vers l'avant sur l'avion 1, par rapport aux réservoirs de carburant R2A, R2B et R2C de l'ensemble R2.

Le système de transfert de carburant 14 (figures 3A et 4A) est configuré pour pouvoir amener, au moins en vol, du carburant de l'un à l'autre desdits ensembles R1 et R2 de réservoirs de carburant afin d'obtenir, alternativement, l'un ou l'autre de deux états de remplissage S1, S2. Le système de transfert de carburant 14 est apte à être commandé, par exemple par un ordre reçu d'un pilote de l'avion ou par un ordre reçu d'un système de pilotage automatique de l'avion.

A un instant donné, dans l'état de remplissage S1, l'ensemble R1 (à savoir au moins certains des réservoirs de carburant R1A, R1B et R1C) contient plus de carburant que dans l'état de remplissage S2. Inversement, à un instant donné, dans l'état de remplissage S1, l'ensemble R2 (à savoir au moins certains des réservoirs de carburant R2A, R2B et R2C) contient moins de carburant que dans l'état de remplissage S2. Dans un mode de réalisation particulier, les réservoirs de carburant R2A, R2B et RC2 peuvent être complètement vides dans l'état de remplissage S1.

L'état dans lequel certains des réservoirs de carburant R1A, R1B, R1C, R2A, R2B et R2C sont remplis de carburant est illustré par des hachures sur les figures 1, 2, 3A, et 4A notamment.

L'état de remplissage S1 (qui correspond à une première répartition donnée du carburant entre les ensembles R1 et R2) est tel que le centre de gravité CG de l'avion 1 est situé vers l'avant de l'avion 1 par rapport au centre de sustentation CS (représentant le point d'application de la portance générée par les ailes 3 et 4), comme représenté sur les figures 3A et 3C. Sur la figure 3A, on a représenté une flèche F1 illustrant la portance générée par les ailes 3 et 4 de l'avion 1, qui est dirigée à partir du centre de sustentation CS de l'avion 1 vers le haut. On a également représenté sur cette figure 3C une flèche G1 illustrant le poids généré par la masse de l'avion 1, qui est dirigée à partir du centre de gravité CG de l'avion 1 vers le bas.

Quant à l'état de remplissage S2 (qui correspond à une seconde répartition donnée du carburant entre les ensembles R1 et R2), il est tel que le centre de gravité CG de l'avion 1 est situé vers l'arrière de l'avion 1 par rapport au centre de sustentation CS, comme représenté sur les figures 4A et 4C.

Par ailleurs, l'avion 1 comporte également un mécanisme de pivotement 15 (figures 3A, 4A et 4B). Ce mécanisme de pivotement 15 est apte à être commandé, par exemple par un ordre reçu d'un pilote de l'avion ou par un ordre reçu d'un système de pilotage automatique de l'avion.

Le mécanisme de pivotement 15 est configuré pour pouvoir amener l'ensemble des deux extrémités d'empennage 9 et 10, lors d'un vol de l'avion 1 et également au sol, alternativement dans l'une ou l'autre de deux positions P1 et P2 stables.

La position P1 dite repliée, est telle que les deux extrémités d'empennage 9 et 10 sont agencées sensiblement orthogonalement à un plan général formé par ledit empennage horizontal 8 (ou ses deux parties d'empennage 11 et 12), comme représenté sur la figure 1 et les figures 3A à 3C. Ce plan général peut être sensiblement parallèle à un plan XY. Dans cette position repliée P1, les deux extrémités d'empennage 9 et 10, de forme générale plane, sont sensiblement parallèles au plan XZ. Dans cette position repliée P1, les deux extrémités d'empennage 9 et 10 forment ainsi, ensemble, un empennage vertical arrière et elles sont aptes à remplir les fonctions usuelles d'un empennage vertical d'avion. Dans cette position repliée P1, l'empennage arrière 7 comporte donc un empennage horizontal 8 et un empennage vertical formé des extrémités d'empennage 9 et 10.

En outre, la position P2 dite déployée, est telle que les deux extrémités d'empennage 9 et 10 sont agencées sensiblement dans le plan général formé par ledit empennage horizontal 8 (ou ses deux parties d'empennage 11 et 12), comme représenté sur la figure 2 et les figures 4A à 4C. Dans cette position déployée P1, les deux extrémités d'empennage 9 et 10 forment avec l'empennage horizontal 8 une surface d'empennage horizontal augmentée 16. Grâce à cette surface d'empennage horizontal augmentée 16, l'avion 1 dispose d'une surface globale plus importante et donc plus efficace pour mettre en œuvre des fonctions usuelles d'un empennage horizontal d'avion et surtout pour participer à la portance, comme précisé ci-dessous.

Dans l'exemple des figures 1 et 3A à 3C, l'avion 1 se trouve dans une première configuration C1, dans laquelle les ensembles R1 et R2 sont dans l'état de remplissage S1 et les extrémités d'empennage 9 et 10 sont dans la position repliée P1.

Cette configuration C1 de l'avion qui est classique, est utilisée de préférence durant les phases de décollage et d'atterrissage de l'avion 1, comme précisé ci-dessous. Le centre de gravité CG est situé à l'avant du centre de sustentation CS, et l'empennage horizontal 8 exerce une force vers le bas, comme illustré par une flèche G2 sur la figure 3C à partir d'un point d'application C0 situé au niveau de la queue 13 de l'avion 1 (ou comme montré par une flèche G3 pour la partie d'empennage 12 sur la figure 3B) pour maintenir l'ensemble de l'avion 1 en équilibre. L'équilibre est obtenu par la combinaison des différentes forces illustrées par les flèches G1, G2 et F1. La flèche F1A sur la figure 3B montre la portance générée par l'aile 4.

Par ailleurs, dans l'exemple des figures 2 et 4A à 4C, l'avion 1 se trouve dans une seconde configuration C2, dans laquelle les ensembles R1 et R2 sont dans l'état de remplissage S2 et les extrémités d'empennage 9 et 10 sont dans la position déployée P2.

Cette configuration C2 de l'avion 1 est utilisée, de préférence, durant un vol en croisière. La stabilité en lacet n'est pas aussi critique durant les phases de croisière que dans les phases de décollage et d'atterrissage. L'avion peut, en outre, comporter des surfaces de contrôle mobiles (non représentées) agencées sur les ailes 3 et 4 et/ou sur l'empennage arrière 7, pour réaliser automatiquement une correction additionnelle en lacet.

Dans cette configuration C2, le centre de gravité CG est situé à l'arrière du centre de sustentation CS, et l'empennage horizontal 8 exerce une force vers le haut, comme illustré par une flèche F2 sur la figure 4C à partir du point d'application C0 situé au niveau de la queue 13 de l'avion 1 (ou comme montré par une flèche F3 pour la partie d'empennage 12 sur la figure 4B) pour apporter une portance additionnelle, et ceci à l'aide d'une surface agrandie (à savoir ladite surface d'empennage horizontal agrandie 16).

Dans le cadre de la présente invention, le système de transfert de carburant 14 et le mécanisme de pivotement 15 peuvent être réalisés de différentes manières, permettant de mettre en œuvre les fonctions de transfert et de pivotement.

Dans un mode de réalisation préféré, le système de transfert de carburant 14 comporte un dispositif de pompage 17 représenté schématiquement sur les figures 3A et 4A.

Dans l'exemple représenté sur les figures, les moteurs 5 et 6 sont agencés sous les ailes 3 et 4 de l'avion 1. En variante (non représentée), les moteurs peuvent également être agencés sur le fuselage 2 de l'avion 1.

La présente invention s'applique aussi bien à un avion dont les moteurs 5 et 6 sont des turboréacteurs (« turbojet » en anglais) ou des turbopropulseurs (« turbopropeller » en anglais), comme représenté schématiquement sur les exemples des figures 1 à 4C, qu'à un avion (non représenté) dont les moteurs sont des moteurs à soufflante non carénée (« propfan » en anglais) ou à rotor non caréné (« open rotor » en anglais), avec une simple propulsion ou une propulsion contrarotative sur chaque ensemble mât/moteur.

La présente invention concerne également un procédé de modification de la configuration d'un avion 1 tel que celui décrit ci-dessus.

Ce procédé comprend, comme représenté sur la figure 5 :
- une étape E1 consistant à amener l'avion 1 dans la configuration C1 (figures 1 et 3A à 3C). Pour ce faire, cette étape E1 consiste :
   - d'une part, à transférer le cas échéant du carburant de l'ensemble R2 vers l'ensemble R1 de manière à amener les ensembles R1 et R2 dans l'état de remplissage S1 représenté sur les figures 1 et 3A à 3C, à l'aide du système de transfert de carburant 14, et ceci à partir de l'état de remplissage S2 représenté sur les figures 2 et 4A à 4C, en réalisant un transfert de carburant dans le sens illustré schématiquement par une flèche A2 sur les figures 2 et 4A. Lors du décollage de l'avion, les ensembles R1 et R2 peuvent être initialement dans l'état de remplissage S1, avec les réservoirs R2A, R2B et R2C vides ; et
   - d'autre part, à amener les extrémités d'empennage 9 et 10 dans la position repliée P1 représentée sur les figures 1 et 3A à 3C, à l'aide du mécanisme de pivotement 15, à partir de la position déployée P2 représentée sur les figures 2 et 4A à 4C, dans le sens illustré par des flèches B2 sur les figures 2 et 4B ;
- une étape E2 consistant à amener l'avion 1 dans la configuration C2 (figures 2 et 4A à 4C). Pour ce faire, cette étape E2 consiste :
   - d'une part, à transférer du carburant de l'ensemble R1 vers l'ensemble R2 de manière à amener les ensembles R1 et R2 dans l'état de remplissage S2 représenté sur les figures 2 et 4A à 4C, à l'aide du système de transfert de carburant 14, et ceci à partir de l'état de remplissage S1 représenté sur les figures 1 et 3A à 3C, en réalisant un transfert de carburant dans le sens illustré schématiquement par une flèche A1 sur les figures 1 et 3A ; et
   - d'autre part, à amener les extrémités d'empennage 9 et 10 dans la position déployée P2 représentée sur les figures 2 et 4A à 4C, à l'aide du mécanisme de pivotement 15, à partir de la position repliée P1 représentée sur les figures 1 et 3A à 3C, dans le sens illustré par des flèches B1 sur les figures 1 et 3B.

Les étapes E1 et E2 sont mises en œuvre, alternativement, lors d'un vol de l'avion 1. Le passage de l'une à l'autre de ces étapes E1 et E2, pour changer la configuration de l'avion 1, peut être commandé et réalisé plusieurs fois au cours d'un même vol. La commande de modification de configuration (ou d'activation de l'une ou l'autre des étapes E1 et E2), peut être générée par un pilote de l'avion ou par un système de pilotage automatique de l'avion.

L'étape E1 est mise en œuvre, au moins, lors d'une phase de décollage de l'avion et/ou lors d'une phase d'atterrissage de l'avion, et l'étape E1 est mise en œuvre, au moins, lors d'une phase de vol en croisière de l'avion.

En changeant la configuration de l'avion et la position du centre de gravité durant le vol, on est ainsi en mesure d'augmenter l'efficacité aérodynamique de l'avion 1, et de réduire la consommation de carburant. En outre, l'avion 1, tel que décrit ci-dessus, est en mesure, lorsqu'il se trouve dans la configuration C2, de voler à une altitude plus élevée que les altitudes de vol en croisière maximales usuelles.

L'avion 1, tel que décrit ci-dessus, présente de nombreux autres avantages.

En particulier, par la capacité de faire pivoter les parties d'empennage 9 et 10 :
- la surface de portance de l'avion 1 peut être augmentée, par exemple d'environ 10 %, avec une pénalité en masse faible due au système de transfert de carburant 14 et au système de pivotement 15 ;
- une réduction de la consommation de carburant est obtenue. En vol en croisière, l'empennage arrière 7 génère en effet, à l'aide des parties d'empennage 11 et 12 et des extrémités d'empennage 9 et 10, une force de portance, et l'avion peut voler à une attitude plus élevée ;
- pour une même altitude et une même vitesse, la traînée globale est réduite en raison de la réduction du coefficient de portance global sur la surface portante, ce qui permet d'économiser du carburant ;
- l'augmentation de surface par le déploiement des parties d'empennage 9 et 10, permet de voler à une altitude plus élevée, sans augmentation de puissance et sans augmentation de la surface de l'aile principale formée par les ailes 3 et 4 (et donc sans augmentation de masse) ;
- les parties d'empennage 9 et 10 (formant, en position repliée, un empennage vertical arrière) deviennent une surface de portance lorsqu'elles sont déployées durant la phase de vol en croisière ; et
- le plan horizontal arrière 7 complet devenant une surface de portance et non une surface appliquant une force vers le bas, peut être une surface laminaire.

## Revendications

1. Avion présentant un axe longitudinal (L) comportant au moins un fuselage (2), deux ailes (3, 4), des moteurs (5, 6), un empennage arrière (7) comprenant un empennage horizontal (8) pourvu de deux extrémités d'empennage (9, 10), et au moins un premier ensemble (R1) de réservoirs de carburant (R1A, R1B, R1C), ledit avion (1) comportant au moins un second ensemble (R2) de réservoirs de carburant (R2A, R2B, R2C), décalé par rapport audit premier ensemble (R1) de réservoirs de carburant (R1A, R1B, R1C) au moins selon l'axe longitudinal (L), et au moins un système de transfert de carburant (14) configuré pour pouvoir transférer, au moins en vol, du carburant de l'un à l'autre desdits premier et second ensembles (R1, R2) de réservoirs de carburant,
**caractérisé en ce que** lesdites extrémités d'empennage (9, 10) sont montées de manière à pouvoir être pivotées, au moins en vol, par rapport audit empennage horizontal (8).

2. Avion selon la revendication 1, ledit avion (1) présentant un centre de gravité (CG) et un centre de sustentation (CS),
**caractérisé en ce que** le système de transfert de carburant (14) est apte à être commandé et il est configuré pour pouvoir amener, au moins en vol, du carburant de l'un à l'autre desdits premier et second ensembles (R1, R2) de réservoir de carburant afin d'obtenir, alternativement, l'un ou l'autre des deux états de remplissage (S1, S2) suivants :
- un premier état de remplissage (S1), dans lequel le centre de gravité (CG) de l'avion (1) est situé vers l'avant de l'avion (1) par rapport au centre de sustentation (CS) ; et
- un second état de remplissage (S2), dans lequel le centre de gravité (CG) de l'avion (1) est situé vers l'arrière de l'avion (1) par rapport au centre de sustentation (CS).

3. Avion selon l'une des revendications 1 et 2,
**caractérisé en ce qu'**il comporte au moins un mécanisme de pivotement (15) apte à être commandé et configuré pour pouvoir amener chacune des deux extrémités d'empennage (9, 10), au moins en vol, alternativement dans l'une ou l'autre des deux positions (P1, P2) stables suivantes :
- une première position (P1) dite repliée, dans laquelle les deux extrémités d'empennage (9, 10) sont agencées sensiblement orthogonalement à un plan général dudit empennage horizontal (8) de manière à former un empennage vertical ; et
- une seconde position (P2) dite déployée, dans laquelle les deux extrémités d'empennage (9, 10) sont agencées sensiblement dans le plan général dudit empennage horizontal (8) de manière à former avec l'empannage horizontal (8) une surface d'empennage horizontal augmentée (16).

4. Avion selon la revendication 2,
**caractérisé en ce que** le système de transfert de carburant (14) comporte au moins un dispositif de pompage (17).

5. Avion selon l'une quelconque des revendications précédentes, **caractérisé en ce que** ledit premier ensemble (R1) de réservoirs de carburant comprend :
- au moins un réservoir de carburant (R1A) agencé dans l'une (3) desdites ailes (3, 4) de l'avion ; et
- au moins un réservoir de carburant (R1C) agencé dans l'autre (4) desdits ailes (3, 4) de l'avion (1).

6. Avion selon l'une quelconque des revendications précédentes, **caractérisé en ce que** ledit premier ensemble (R1) de réservoirs de carburant comprend au moins un réservoir de carburant (R1B) agencé dans le fuselage 2 de l'avion (1), longitudinalement au niveau de l'emplanture (3A, 3B) des ailes (3, 4) sur le fuselage (2).

7. Avion selon l'une quelconque des revendications précédentes, **caractérisé en ce que** ledit empennage horizontal (8) comprend deux parties d'empennage (11, 12) agencées de part et d'autre d'un axe vertical de symétrie de l'avion (1), et **en ce que** ledit second ensemble (R2) de réservoirs de carburant comprend :
- au moins un réservoir de carburant (R2A) agencé dans l'une (11) desdites parties d'empennage (11, 12) de l'empennage horizontal (8) ; et
- au moins un réservoir de carburant (R2C) agencé dans l'autre (12) desdites parties d'empennage (11, 12) de l'empennage horizontal (8).

8. Avion selon l'une quelconque des revendications précédentes, **caractérisé en ce que** ledit second ensemble (R2) de réservoirs de carburant comprend au moins un réservoir (R2B) agencé dans le fuselage (2) de l'avion (1), longitudinalement au niveau de l'extrémité avant de l'empennage arrière (7) de l'avion (1).

9. Procédé de modification en vol d'une configuration d'un avion (1), ledit avion (1) comportant au moins un fuselage (2), deux ailes (3, 4), des moteurs (5, 6), un empennage arrière (7) comprenant un empennage horizontal (8) pourvu de deux extrémités d'empennage (9, 10), et au moins des premier et second ensembles (R1, R2) de réservoirs de carburant, ainsi qu'au moins un système de transfert de carburant (14) configuré pour pouvoir transférer du carburant de l'un à l'autre desdits premier et second ensembles (R1, R2) de réservoirs de carburant, lesdites extrémités d'empennage (9, 10) étant montées de manière à pouvoir être pivotées par rapport audit empennage horizontal (8), procédé **caractérisé en ce qu'**il comprend :
- au moins une première étape (E1) consistant, d'une part, à transférer du carburant de manière à amener lesdits premier et second ensembles (R1, R2) de réservoirs de carburant dans un premier état de remplissage (S1) dans lequel le centre de gravité (CG) de l'avion (1) est situé vers l'avant de l'avion (1) par rapport au centre de sustentation (CS), et d'autre part, à amener lesdites extrémités d'empennage (9, 10) dans une position (P1) dite repliée dans laquelle lesdites extrémités d'empennage (9, 10) sont agencées sensiblement orthogonalement à un plan général dudit empennage horizontal (8) ; et
- au moins une seconde étape (E2) consistant, d'une part, à transférer du carburant de manière à amener lesdits premier et second ensembles (R1, R2) de réservoirs de carburant dans un second état de remplissage (S2), dans lequel le centre de gravité (CG) de l'avion (1) est situé vers l'arrière de l'avion (1) par rapport au centre de sustentation (CS), et d'autre part, à amener lesdites extrémités d'empennage (9, 10) dans une position (P2) dite déployée dans laquelle lesdites extrémités d'empennage (9, 10) sont agencées sensiblement dans le plan général dudit empennage horizontal (8),
lesdites première et seconde étapes (E1, E2) étant mises en œuvre alternativement au moins lors d'un vol de l'avion (1).

10. Procédé selon la revendication 9,
**caractérisé en ce que** ladite première étape (E1) est mise en œuvre, au moins, lors d'une phase de décollage de l'avion (1) et/ou lors d'une phase d'atterrissage de l'avion (1), et **en ce que** ladite seconde étape (E2) est mise en œuvre, au moins, lors d'une phase de vol en croisière de l'avion (1).

## Patentansprüche

1. Flugzeug mit einer Längsachse (L), das mindestens einen Rumpf (2), zwei Flügel (3, 4), Motoren (5, 6), ein Heckleitwerk (7), das ein waagrechtes Leitwerk (8) enthält, das mit mindestens zwei Leitwerksenden (9, 10) versehen ist, und mindestens eine erste Einheit (R1) von Treibstofftanks (R1A, R1B, R1C) aufweist, wobei das Flugzeug (1) mindestens eine zweite Einheit (R2) von Treibstofftanks (R2A, R2B, R2C), die bezüglich der ersten Einheit (R1) von Treibstofftanks (R1A, R1B, R1C) gemäß mindestens der Längsachse (L) versetzt ist, und mindestens ein Treibstoffübertragungssystem (14) aufweist, das konfiguriert ist, zumindest im Flug Treibstoff von der einen zur anderen der ersten und zweiten Einheiten (R1, R2) von Treibstofftanks übertragen zu können,
**dadurch gekennzeichnet, dass** die Leitwerksenden (9, 10) so montiert sind, dass sie zumindest im Flug bezüglich des waagrechten Leitwerks (8) geschwenkt werden können.

2. Flugzeug nach Anspruch 1, wobei das Flugzeug (1) einen Schwerpunkt (CG) und ein Auftriebszentrum (CS) aufweist, **dadurch gekennzeichnet, dass** das Treibstoffübertragungssystem (14) gesteuert werden kann und konfiguriert ist, zumindest im Flug Treibstoff von der einen zur anderen der ersten und zweiten Einheiten (R1, R2) von Treibstofftanks zuführen zu können, um abwechselnd den einen oder anderen der zwei folgenden Füllzustände (S1, S2) zu erhalten:
- einen ersten Füllzustand (S1), in dem der Schwerpunkt (CG) des Flugzeugs (1) sich bezüglich des Auftriebszentrums (CS) vorne im Flugzeug (1) befindet; und
- einen zweiten Füllzustand (S2), in dem der Schwerpunkt (CG) des Flugzeugs (1) sich bezüglich des Auftriebszentrums (CS) hinten im Flugzeug (1) befindet.

3. Flugzeug nach einem der Ansprüche 1 und 2, **dadurch gekennzeichnet, dass** es mindestens einen Schwenkmechanismus (15) aufweist, der gesteuert werden kann und konfiguriert ist, jedes der zwei Leitwerksenden (9, 10) zumindest im Flug abwechselnd in die eine oder andere der zwei folgenden stabilen Stellungen (P1, P2) bringen zu können:
- eine erste so genannte angewinkelte Stellung (P1), in der die zwei Leitwerksenden (9, 10) im Wesentlichen orthogonal zu einer allgemeinen Ebene des waagrechten Leitwerks (8) angeordnet sind, um ein senkrechtes Leitwerk zu bilden; und
- eine zweite so genannte ausgestreckte Stellung (P2), in der die zwei Leitwerksenden (9, 10) im Wesentlichen in der allgemeinen Ebene des waagrechten Leitwerks (8) angeordnet sind, um mit dem waagrechten Leitwerk (8) eine vergrößerte Fläche des waagrechten Leitwerks (16) zu bilden.

4. Flugzeug nach Anspruch 2, **dadurch gekennzeichnet, dass** das Treibstoffübertragungssystem (14) mindestens eine Pumpvorrichtung (17) aufweist.

5. Flugzeug nach einem der vorhergehenden Ansprüche, **dadurch gekennzeichnet, dass** die erste Einheit (R1) von Treibstofftanks enthält:
- mindestens einen Treibstofftank (R1A), der in einem (3) der Flügel (3, 4) des Flugzeugs angeordnet ist; und
- mindestens einen Treibstofftank (R1C), der im anderen (4) der Flügel (3, 4) des Flugzeugs (1) angeordnet ist.

6. Flugzeug nach einem der vorhergehenden Ansprüche, **dadurch gekennzeichnet, dass** die erste Einheit (R1) von Treibstofftanks mindestens einen Treibstofftank (R1B) enthält, der im Rumpf (2) des Flugzeugs (1) in Längsrichtung im Bereich der Wurzel (3A, 3B) der Flügel (3, 4) auf dem Rumpf (2) angeordnet ist.

7. Flugzeug nach einem der vorhergehenden Ansprüche, **dadurch gekennzeichnet, dass** das waagrechte Leitwerk (8) zwei Leitwerksteile (11, 12) enthält, die zu beiden Seiten einer senkrechten Symmetrieachse des Flugzeugs (1) angeordnet sind, und dass die zweite Einheit (R2) von Treibstofftanks enthält:
- mindestens einen Treibstofftank (R2A), der in einem (11) der Leitwerksteile (11, 12) des waagrechten Leitwerks (8) angeordnet ist; und
- mindestens einen Treibstofftank (R2C), der im anderen (12) der Leitwerksteile (11, 12) des waagrechten Leitwerks (8) angeordnet ist.

8. Flugzeug nach einem der vorhergehenden Ansprüche, **dadurch gekennzeichnet, dass** die zweite Einheit (R2) von Treibstofftanks mindestens einen Tank (R2B) enthält, der im Rumpf (2) des Flugzeugs (1) in Längsrichtung im Bereich des vorderen Endes des Heckleitwerks (7) des Flugzeugs (1) angeordnet ist.

9. Verfahren zur Änderung einer Konfiguration eines Flugzeugs (1) im Flug, wobei das Flugzeug (1) mindestens einen Rumpf (2), zwei Flügel (3, 4), Motoren (5, 6), ein Heckleitwerk (7), das ein waagrechtes Leitwerk (8) enthält, das mit zwei Leitwerksenden (9, 10) versehen ist, und mindestens erste und zweite zweite Einheiten (R1, R2) von Treibstofftanks sowie mindestens ein Treibstoffübertragungssystem (14) aufweist, das konfiguriert ist, Treibstoff von der einen zur anderen der ersten und zweiten Einheiten (R1, R2) von Treibstofftanks übertragen zu können, wobei die Leitwerksenden (9, 10) so montiert sind, dass sie bezüglich des waagrechten Leitwerks (8) geschwenkt werden können, wobei das Verfahren **dadurch gekennzeichnet ist, dass** es enthält:
- mindestens einen ersten Schritt (E1), der einerseits darin besteht, Treibstoff zu übertragen, um die ersten und zweiten Einheiten (R1, R2) von Treibstofftanks in einen ersten Füllzustand (S1) zu bringen, in dem der Schwerpunkt (CG) des Flugzeugs (1) sich bezüglich des Auftriebszentrums (CS) vorne im Flugzeug (1) befindet, und andererseits darin besteht, die Leitwerksenden (9, 10) in eine so genannte angewinkelte Stellung (P1) zu bringen, in der die Leitwerksenden (9, 10) im Wesentlichen orthogonal zu einer allgemeinen Ebene des waagrechten Leitwerks (8) angeordnet sind; und
- mindestens einen zweiten Schritt (E2), der einerseits darin besteht, Treibstoff zu übertragen, um die ersten und zweiten Einheiten (R1, R2) von Treibstofftanks in einen zweiten Füllzustand (S2) zu bringen, in dem der Schwerpunkt (CG) des Flugzeugs (1) sich bezüglich des Auftriebszentrums (CS) hinten im Flugzeug (1) befindet, und andererseits darin besteht, die Leitwerksenden (9, 10) in eine so genannte ausgestreckte Stellung (P2) zu bringen, in der die Leitwerksenden (9, 10) im Wesentlichen in der allgemeinen Ebene des waagrechten Leitwerks (8) angeordnet sind,
wobei die ersten und zweiten Schritte (E1, E2) mindestens während eines Flugs des Flugzeugs (1) abwechselnd durchgeführt werden.

10. Verfahren nach Anspruch 9, **dadurch gekennzeichnet, dass** der erste Schritt (E1) mindestens bei einer Startphase des Flugzeugs (1) und/oder einer Landephase des Flugzeugs (1) durchgeführt wird, und dass der zweite Schritt (E2) mindestens bei einer Reiseflugphase des Flugzeugs (1) durchgeführt wird.

## Claims

1. Aeroplane having a longitudinal axis (L) comprising at least a fuselage (2), two wings (3, 4), engines (5, 6), a rear tail unit (7) comprising a horizontal tail (8) provided with two tail ends (9, 10), and at least one first set (R1) of fuel tanks (R1A, R1B, R1C), said aeroplane (1) comprising at least one second set (R2) of fuel tanks (R2A, R2B, R2C), offset relative to said first set (R1) of fuel tanks (R1A, R1B, R1C) at least along the longitudinal axis (L), and at least one fuel transfer system (14) configured to be able to transfer, at least in flight, fuel from one to the other of said first and second sets (R1, R2) of fuel tanks, **characterized in that** said tail ends (9, 10) are mounted so as to be able to be pivoted, at least in flight, relative to said horizontal tail (8).

2. Aeroplane according to Claim 1, said aeroplane (1) having a centre of gravity (CG) and a centre of lift (CS),
**characterized in that** the fuel transfer system (14) is capable of being controlled and it is configured to be able to bring, at least in flight, fuel from one to the other of said first and second sets (R1, R2) of fuel tanks in order to obtain, alternately, one or other of the following two filling states (S1, S2):
- a first filling state (S1), in which the centre of gravity (CG) of the aeroplane (1) is situated towards the front of the aeroplane (1) relative to the centre of lift (CS); and
- a second filling state (S2), in which the centre of gravity (CG) of the aeroplane (1) is situated towards the rear of the aeroplane (1) relative to the centre of lift (CS) .

3. Aeroplane according to either of Claims 1 and 2,
**characterized in that** it comprises at least one pivoting mechanism (15) capable of being controlled and configured to be able to bring each of the two tail ends (9, 10), at least in flight, alternately into one or other of the following two stable positions (P1, P2):
- a first, so-called folded position (P1) in which the two tail ends (9, 10) are arranged substantially orthogonally to a general plane of said horizontal tail (8) so as to form a vertical tail; and
- a second, so-called deployed position (P2) in which the two tail ends (9, 10) are arranged substantially in the general plane of said horizontal tail (8) so as to form, with the horizontal tail (8) an augmented horizontal tail surface (16).

4. Aeroplane according to Claim 2,
**characterized in that** the fuel transfer system (14) comprises at least one pumping device (17).

5. Aeroplane according to any one of the preceding claims,
**characterized in that** said first set (R1) of fuel tanks comprises:
- at least one fuel tank (R1A) arranged in one (3) of said wings (3, 4) of the aeroplane; and
- at least one fuel tank (R1C) arranged in the other (4) of said wings (3, 4) of the aeroplane (1).

6. Aeroplane according to any one of the preceding claims,
**characterized in that** said first set (R1) of fuel tanks comprises at least one fuel tank (R1B) arranged in the fuselage (2) of the aeroplane (1), longitudinally at the root (3A, 3B) of the wings (3, 4) on the fuselage (2).

7. Aeroplane according to any one of the preceding claims,
**characterized in that** said horizontal tail (8) comprises two tail parts (11, 12) arranged on either side of a vertical axis of symmetry of the aeroplane (1), and **in that** said second set (R2) of fuel tanks comprises:
- at least one fuel tank (R2A) arranged in one (11) of said tail parts (11, 12) of the horizontal tail (8); and
- at least one fuel tank (R2C) arranged in the other (12) of said tail parts (11, 12) of the horizontal tail (8).

8. Aeroplane according to any one of the preceding claims,
**characterized in that** said second set (R2) of fuel tanks comprises at least one tank (R2B) arranged in the fuselage (2) of the aeroplane (1), longitudinally at the front end of the rear tail unit (7) of the aeroplane (1).

9. Method for modifying in flight a configuration of an aeroplane (1), said aeroplane (1) comprising at least a fuselage (2), two wings (3, 4), engines (5, 6), a rear tail unit (7) comprising a horizontal tail (8) provided with two tail ends (9, 10), and at least first and second sets (R1, R2) of fuel tanks, and at least one fuel transfer system (14) configured to be able to transfer fuel from one to the other of said first and second sets (R1, R2) of fuel tanks, said tail ends (9, 10) being mounted so as to be able to be pivoted relative to said horizontal tail (8),
method **characterized in that** it comprises:
- at least a first step (E1) consisting, on the one hand, in transferring fuel so as to bring said first and second sets (R1, R2) of fuel tanks into a first filling state (S1) in which the centre of gravity (CG) of the aeroplane (1) is situated towards the front of the aeroplane (1) relative to the centre of lift (CS), and, on the other hand, in bringing said tail ends (9, 10) into a so-called folded position (P1) in which said tail ends (9, 10) are arranged substantially orthogonally to a general plane of said horizontal tail (8); and
- at least a second step (E2) consisting, on the one hand, in transferring fuel so as to bring said first and second sets (R1, R2) of fuel tanks into a second filling state (S2), in which the centre of gravity (CG) of the aeroplane (1) is situated towards the rear of the aeroplane (1) relative to the centre of lift (CS), and, on the other hand, in bringing said tail ends (9, 10) into a so-called deployed position (P2) in which said tail ends (9, 10) are arranged substantially in the general plane of said horizontal tail (8),
said first and second steps (E1, E2) being implemented alternately at least during a flight of the aeroplane (1) .

10. Method according to Claim 9,
**characterized in that** said first step (E1) is implemented, at least, during a take-off phase of the aeroplane (1) and/or during a landing phase of the aeroplane (1), and **in that** said second step (E2) is implemented, at least, during a cruising flight phase of the aeroplane (1).
